# EUROPÄISCHE PATENTSCHRIFT

(11) **EP 1 478 990 B1**
(45) Veröffentlichungstag und Bekanntmachung des Hinweises auf die Patenterteilung: **03.12.2008**
(21) Anmeldenummer: 03704685.1
(22) Anmeldetag: 24.02.2003
(51) Int. Cl.: G05B 19/418

(54) **VERFAHREN ZUM ÜBERTRAGEN VON FELDGERÄTEDATEN AN EINE EXTERNE DATENBANK**
METHOD FOR TRANSFERRING FIELD DEVICE DATA TO AN EXTERNAL DATA BANK
PROCEDE DE TRANSMISSION DE DONNEES D'APPAREILS DE TERRAIN A UNE BASE DE DONNEES EXTERNE

(30) Priorität: 26.02.2002 DE 10208013
(43) Veröffentlichungstag der Anmeldung: 24.11.2004
(73) Patentinhaber: Endress + Hauser Process Solutions AG, 4153 Reinach BL (CH)
(72) Erfinder: DE GROOT, Vincent, 79664 Wehr (DE)
(74) Vertreter: Andres, Angelika Maria
(86) Internationale Anmeldenummer: PCT/EP2003/001850
(87) Internationale Veröffentlichungsnummer: WO 2003/073191

(56) Entgegenhaltungen:
- EP-A- 0 964 325
- WO-A-00/77592
- WO-A-01/02891
- DE-A- 10 007 971
- DE-A- 10 049 569
- ANONYMOUS: "FDT/DTM" INTERNET ARTICLE, 30. September 2001 (2001-09-30), XP002254703 Gefunden im Internet: URL:http://www.profibus.com/imperia/md/con tent/pisc/brochures/FDT-DTM-Bro chure2001-d> [gefunden am 2003-09-16]
- "ABB SMART VISION BROCHURE. MANAGEMENT-SOFTWARE FUER INTELLIGENTE FELDGERAETE. EIN TOOL FUER ALLE GERAETE" INTERNET ARTICLE, 9. November 2001 (2001-11-09), XP002240728 Gefunden im Internet: URL:http://www.abb.com/global/abbzh/>
- ROBERT ITSCHNER ET AL: "GLASS: Remote Monitoring of Embedded Systems in Power Engineering" IEEE INTERNET COMPUTING, IEEE SERVICE CENTER, PISCATAWAY, NJ, US, Juni 1998 (1998-06), Seiten 46-52, XP002114070 ISSN: 1089-7801

## Beschreibung

Die Erfindung betrifft ein Verfahren zum Übertragen von Feldgerätedaten an eine externe Datenbank gemäß dem Oberbegriff des Anspruchs 1.

In der Prozessleittechnik werden vielfach Feldgeräte zur Erfassung und Beeinflussung von Prozessvariablen eingesetzt.
Beispiele für Feldgeräte sind Temperaturmessgeräte, die die Temperatur eines Prozessmediums erfassen, Durchflussmesser, die den Durchfluss eines Prozessmediums in einem Rohrleitungsabschnitt erfassen oder Füllstandsmesser, die den Füllstand einer Flüssigkeit oder eines Schüttguts in einem Behälter bestimmen.
Die Feldgeräte sind normalerweise über einen Feldbus mit einer Steuereinheit verbunden, die den gesamten Prozessablauf steuert.
Bei der Steuereinheit kann es sich z.B. um ein Leitsystem handeln.

Bei der Inbetriebnahme eines Feldgerätes vor Ort in einer Produktionsanlage sind herstellerspezifische und gerätespezifische Eigenschaften zu berücksichtigen. Hierfür stellt der Feldgerätehersteller eine spezielle Feldgerätesoftware zur Verfügung. Die Integration des Feldgeräts ins Leitsystem erfolgt über definierte Schnittstellen zwischen der Feldgerätesoftware und der Leitsystemanwendung.

Neben den Messwerten der einzelnen Prozessvariablen liefern die Feldgeräte noch weitere wichtige Informationen, wie zum Beispiel Diagnoseinformationen, Fehlerreports, aktuelle Prozessbedingungen, etc. Diese Informationen werden normalerweise in einer internen Datenbank, die mit dem Leitsystem verbunden ist oder in dieses integriert ist, abgespeichert. D.h. diese Informationen stehen nur dem Leitsystemanwender zur Verfügung. In der Regel ist das Leitsystem mit übergeordneten Firmen-Kommunikationssystemen verbunden, die auch Verbindung zum Internet ermöglichen.
In der Regel ist der externe Zugriff auf das Leitsystem bzw. auf die interne Datenbank nicht möglich bzw. nicht erwünscht. Sogenannte Firewalls unterbinden einen externen Zugriff. Somit hat ein Feldgerätehersteller keinen Zugriff auf die in der internen Datenbank abgespeicherten Informationen, die speziell seine Geräte betreffen. Diese in der internen Datenbank abgespeicherte Informationen können jedoch für den Feldgerätehersteller von großer Wichtigkeit für Weiterentwicklungen sein, insbesondere wenn es sich um Informationen zu Diagnose, Fehlerreports und aktuelle Prozessbedingungen handelt.

Es besteht natürlich die Möglichkeit diese Informationen auf herkömmlichem Weg über E-Mail, Telefon oder Briefverkehr vom Leitsystemanwender zum Feldgerätehersteller zu übertragen. Dadurch treten jedoch Zeitverzögerungen ein und ein Datenverlust ist nicht auszuschließen. Eine weitere Möglichkeit bestünde darin, das Leitsystem entsprechend umzuprogrammieren, um wichtige Informationen direkt an den Feldgerätehersteller zu schicken. (siehe EP 0 964 325) Dies wäre jedoch mit einer aufwendigen Umprogrammierung der Leitsystemanwendung verbunden.

Aufgabe der Erfindung ist es deshalb ein Verfahren zur Datenübertragung von Feldgerätedaten an eine externe Datenbank anzugeben, das die oben genannten Nachteile nicht aufweist, dass insbesondere eine einfache automatische Datenübertragung ermöglicht.

Gelöst wird diese Aufgabe durch die im Anspruch 1 angegebenen Verfahrensschritte.

Die wesentliche Idee der Erfindung besteht darin, mit der Feldgerätesoftware einen ausführbaren Code abzuspeichern, der Feldgerätedaten, die für den Feldgerätehersteller wichtig sind, zu einer externen Datenbank transportiert.
Der ausführbare Programmcode kann als Aglet oder als Applet ausgebildet sein.

In einer Weiterbildung der Erfindung ist der ausführbare Code plattformunabhängig z. B. in Java programmiert. Dadurch ist gewährleistet, dass der ausführbare Programmcode für jedes Leitsystem, unabhängig von der Wahl des Betriebssystems, geeignet ist.

Die Datenübertragung zwischen Leitsystem und externer Datenbank kann auf unterschiedliche Weise erfolgen, zum Beispiel E-Mail, HTTP-Protokoll oder FTP-Protokoll.

Nachfolgend ist die Erfindung anhand eines in der Zeichnung dargestellten Ausführungsbeispiels näher erläutert. Es zeigen:

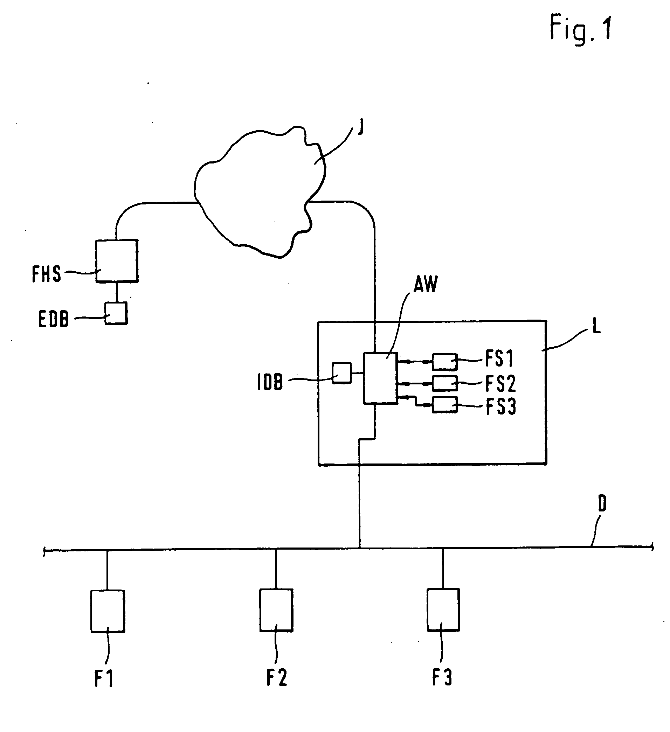

Fig. 1: Prozessautomatisierungssystem mit Verbindung zu einer externen Datenbank.
   Die in Fig. 1 dargestellte Prozessautomatisierungsanlage zeigt ein Leitsystem L, das über einen Datenbus D mit mehreren Feldgeräten F1, F2 und F3 verbunden ist. Bei den Feldgeräten F1 bis F3 kann es sich zum Beispiel um Druckmesser, Temperaturmesser oder Durchflussmesser handeln. Das Leitsystem L kommuniziert über den Datenbus D mit dem jeweiligen Feldgerät zum Beispiel F1. So können Daten zwischen dem Feldgerät F1 und dem Leitsystem L übertragen werden. Die Datenkommunikation auf dem Feldbus erfolgt nach den entsprechenden internationalen Standards, wie zum Beispiel Profibus oder Foundation, Fieldbus. Die Bedienung der Feldgeräte F1, F2, F3, d.h. die Inbetriebnahme, Wartung, Datensicherung, Problembehebung und
   Gerätedokumentation erfolgt vom Leitsystem L aus. Bei der Inbetriebnahme der Feldgeräte F1, F2, F3 wird die jeweilige Feldgerätesoftware im Leitsystem L integriert. Die Integration erfolgt über entsprechende Schnittstellen zwischen der Feldgerätesoftware und der Leitsystemanwendung AW. Stellt die zum Feldgerät F1 gehörende Feldgerätesoftware FS1 einen Fehler im Feldgerät F1 fest, so wird eine entsprechende Fehlermeldung an die Leitsystemanwendung AW übertragen. Je nach Ausführlichkeit der Fehlermeldung kann es sich dabei um eine einfache Statusmeldung oder einen längeren Fehlerreport handeln. Ein Fehlerreport kann unter anderem auch die aktuellen Prozessbedingungen umfassen, die Hinweise darüber geben, welche Ursachen der Fehler im Feldgerät haben könnte.

Die Fehlermeldungen (Statusmeldung, Fehlerreport) werden in einer internen Datenbank IB des Leitsystems L abgespeichert.

Das Leitsystem L ist weiterhin über das Internet J mit einem Feldgeräteherstellerserver FHS verbunden. Der Feldgeräteherstellerserver FHS ist mit einer externen Datenbank EDB verbunden.

Nachfolgend ist das erfindungsgemäße Verfahren näher erläutert.

Die Feldgerätesoftware z.B. FS1 weist einen ausführbaren Programmcode auf. Gestartet wird dieser ausführbare Programmcode beispielsweise wenn eine Fehlermeldung betreffend dem Feldgerät F1 erzeugt wird. Dieser Programmcode sorgt dafür, dass für den Feldgerätehersteller wichtige Informationen von der internen Datenbank IDB über das Internet J zum Feldgeräteherstellerserver FHS übertragen und in der externen Datenbank EDB abgespeichert werden.

Der ausführbare Programmcode kann in die Gerätebeschreibung des Feldgerätes z. B. F1 integriert sein. Bei der Gerätebeschreibung kann es sich um allgemein bekannte Device Descriptions DDs oder um Device Type Manager DTMs für Feldgeräte handeln.

Der ausführbare Programmcode kann dabei als Aglet ausgebildet sein (Aglets sind ein von IBM entworfenes Agentensystem).
Der ausführbare Programmcode kann alternativ als Applet ausgebildet sein. Damit der ausführbare Programmcode unabhängig vom Betriebssystem auf dem die Leitsystemanwendung hardwaremäßig abläuft, ist er plattformunabhängig programmiert. Eine Möglichkeit der plattformunabhängigen Programmierung ist die Programmiersprache Java. Die Datenübertragung vom Leitsystem L an den Feldgeräteherstellerserver FHS kann zum Beispiel per E-Mail, per HTTP-Protokoll, oder per FTP-Protokoll erfolgen.
Bei den Feldgerätedaten kann es sich zum Beispiel um Fehlermeldungen (Statusmeldung, Fehlerreports) handeln.

Mit dem erfindungsgemäßen Verfahren ist es in einfacher Weise möglich, Daten von einer internen Datenbank zu einer externen Datenbank zu übertragen. Die Datenübertragung wird unabhängig von der Leitsystemanwendungen AW durch die Feldgerätesoftware (z. B. FS1) initiiert und erfolgt somit automatisch.

Der Feldgerätehersteller benötigt hierfür keinen Zugriff auf die interne Datenbank IDB. Sind mehrere Leitsysteme mit der externen Datenbank EDB verbunden, so können in der externen Datenbank EDB alle Informationen zu den Produkten des Feldgeräteherstellers gesammelt und analysiert werden.

Durch das erfindungsgemäße Verfahren können Weiterentwicklungen auf Seiten des Feldgeräteherstellers bei seinen Produkten sehr effektiv und ohne Zeitverlust durchgeführt werden, da ihm eine Vielzahl ausgewählten Informationen, die vom ihm (dem Feldgerätehersteller) feldgerätespezifisch auswählbar sind, zur Verfügung stehen.

## Patentansprüche

1. Verfahren zum Übertragen von Feldgerätedaten, die in einer internen Datenbank IDB eines Prozessleitsystems L abgespeichert sind, zu einer externen Datenbank EDB, **dadurch gekennzeichnet, dass** mindestens einem Feldgerät F1 ein ausführbarer Programmcode FS1 zugeordnet ist, der dafür sorgt, dass Feldgerätedaten automatisch vom Leitsystem L zu der externen Datenbank EDB übertragen werden, wobei die Datenübertragung unabhängig von einer Leitsystemanwendung AW des Leitsystems L durch den ausführbaren Programmcode FS1 initiiert wird.

2. Verfahren nach Anspruch 1, **dadurch gekennzeichnet, dass** der ausführbare Programmcode in der Gerätebeschreibung des Feldgeräts F integriert ist.

3. Verfahren nach Anspruch 2, **dadurch gekennzeichnet, dass** die Gerätebeschreibung eine Device Description DD oder ein Device Type Manager DTM ist.

4. Verfahren nach einem der vorhergehenden Ansprüche, **dadurch gekennzeichnet, dass** der Programmcode im Feldgerät abgespeichert ist.

5. Verfahren nach einem der vorhergehenden Ansprüche, **dadurch gekennzeichnet, dass** der ausführbare Programmcode als Aglet ausgebildet ist.

6. Verfahren nach Anspruch 1, **dadurch gekennzeichnet, dass** der ausführbare Programmcode als Applet ausgebildet ist.

7. Verfahren nach einer der vorhergehenden Ansprüche, **dadurch gekennzeichnet, dass** der ausführbare Programmcode plattformunabhängig ist.

8. Verfahren nach Anspruch 4, **dadurch gekennzeichnet, dass** der ausführbare Programmcode in der Programmiersprache Java geschrieben ist.

9. Verfahren nach einer der vorhergehenden Ansprüche, **dadurch gekennzeichnet, dass** die Datenübertragung per E-Mail erfolgt.

10. Verfahren nach einem der vorhergehenden Ansprüche, **dadurch gekennzeichnet, dass** die Datenübertragung per HTTP-Protokoll erfolgt.

11. Verfahren nach einem der vorhergehenden Ansprüche, **dadurch gekennzeichnet, dass** die Datenübertragung per FTP-Protokoll erfolgt.

12. Verfahren nach einem der vorhergehenden Ansprüche, **dadurch gekennzeichnet, dass** die Feldgerätedaten z. B. Fehlermeldungen oder Prozessbedingungen sind.

## Claims

1. Process for transmitting field device data, which are saved in an internal database IDB of a process control system L, to an external database EDB, **characterized in that** an executable program code FS1 is assigned to at least one field device F1, with said program code ensuring that field device data are automatically transmitted from the control system L to the external database EDB, whereby data transmission is initiated by the executable program code FS1 independently of the control system application AW of the control system L.

2. Process as per Claim 1, **characterized in that** the executable program code is integrated into the device description of the field device F.

3. Process as per Claim 2, **characterized in that** the device description is a Device Description DD or a Device Type Manager DTM.

4. Process as per one of the previous claims, **characterized in that** the program code is saved in the field device.

5. Process as per one of the previous claims, **characterized in that** the executable program code is designed as an aglet.

6. Process as per Claim 1, **characterized in that** the executable program code is designed as an applet.

7. Process as per one of the previous claims, **characterized in that** the executable program code is platform-independent.

8. Process as per Claim 4, **characterized in that** the executable program code is written in the Java programming language.

9. Process as per one of the previous claims, **characterized in that** the data are transmitted by e-mail.

10. Process as per one of the previous claims, **characterized in that** the data are transmitted by HTTP protocol.

11. Process as per one of the previous claims, **characterized in that** the data are transmitted by FTP protocol.

12. Process as per one of the previous claims, **characterized in that** the field device data are error messages or process conditions for example.

## Revendications

1. Procédé destiné à la transmission de données d'appareils de terrain, qui sont enregistrées dans une base de données interne IDB d'un système numérique de contrôle commande L, vers une base de données externe EDB, **caractérisé en ce qu'**est attribué à au moins un appareil de terrain F1 un code de programme FS1 exécutable, qui assure la transmission automatique du système numérique de contrôle commande L vers la base de données externe EDB, la transmission de données étant lancée par le code de programme FS1 exécutable, indépendamment de l'application AW du système numérique de contrôle commande L.

2. Procédé selon la revendication 1, **caractérisé en ce que** le code de programme exécutable est intégré dans la description de l'appareil de terrain F.

3. Procédé selon la revendication 2, **caractérisé en ce que** la description de l'appareil est une "Device Description" DD ou un "Device Type Manager" DTM.

4. Procédé selon l'une des revendications précédentes, **caractérisé en ce que** le code de programme est enregistré dans l'appareil de terrain.

5. Procédé selon l'une des revendications précédentes, **caractérisé en ce que** le code de programme exécutable est conçu en tant qu'agent mobile.

6. Procédé selon la revendication 1, **caractérisé en ce que** le code de programme exécutable est conçu en tant qu'applette.

7. Procédé selon l'une des revendications précédentes, **caractérisé en ce que** le code de programme exécutable est indépendant de la plate-forme.

8. Procédé selon la revendication 4, **caractérisé en ce que** le code de programme exécutable est écrit en langage de programmation Java.

9. Procédé selon l'une des revendications précédentes, **caractérisé en ce que** la transmission de données est réalisée par e-mail.

10. Procédé selon l'une des revendications précédentes, **caractérisé en ce que** la transmission de données s'effectue via le protocole HTTP.

11. Procédé selon l'une des revendications précédentes, **caractérisé en ce que** la transmission de données s'effectue via le protocole FTP.

12. Procédé selon l'une des revendications précédentes, **caractérisé en ce que** les appareils de terrain sont, par exemple, des messages d'erreurs ou des conditions du process.
